# EUROPÄISCHE PATENTSCHRIFT

(11) **EP 2 233 370 B1**
(45) Veröffentlichungstag und Bekanntmachung des Hinweises auf die Patenterteilung: **04.01.2012**
(21) Anmeldenummer: 10151747.2
(22) Anmeldetag: 27.01.2010
(51) Int. Cl.: B60R 21/0132, B60R 21/013

(54) **Verfahren und Steuergerät zur Ermittlung von Merkmalen zum Treffen einer Auslöseentscheidung eines Insassenschutzmittels eines Fahrzeugs**
Method and control device for determining characteristics for making a decision to release passenger protection of a vehicle
Procédé et appareil de commande destinés à la détermination de caractéristiques destinées à déterminer le déclenchement d'un moyen de protection d'occupants d'un véhicule

(30) Priorität: 26.03.2009 DE 102009001902
(43) Veröffentlichungstag der Anmeldung: 29.09.2010
(73) Patentinhaber: Robert Bosch GmbH, 70442 Stuttgart (DE)
(72) Erfinder: Rauh, Christian, 81377, Muenchen (DE); Hiemer, Marcus, 88074, Kehlen (DE)

(56) Entgegenhaltungen:
- EP-A2- 1 902 908
- EP-A2- 1 914 122
- DE-A1-102006 038 151
- DE-A1-102007 027 649
- DE-A1-102007 030 313
- DE-A1-102008 001 215

## Beschreibung

### Stand der Technik

Die vorliegende Erfindung bezieht sich auf ein Verfahren gemäß Anspruch 1, ein Verfahren gemäß Anspruch 13, ein Steuergerät gemäß Anspruch 15, sowie ein Computerprogrammprodukt gemäß Anspruch 16.

Die DE 10 2006 038 151 A1 beschreibt eine Vorrichtung und ein Verfahren zur Ansteuerung von Personenschutzmitteln, bei dem durch eine Auswerteschaltung ein Merkmalsvektor mit wenigstens zwei Merkmalen aus wenigstens einem Signal einer Unfallsensorik gebildet wird. Die Auswerteschaltung klassifiziert den Merkmalsvektor in der entsprechenden Dimension mittels wenigstens einer Klassengrenze.

Auch kann durch Probieren ermittelt werden, welche Funktionalität in einen Auslösealgorithmus, beispielsweise eines Airbags integriert werden muss, um eine Auslöseentscheidung zu erzeugen.

Beispielsweise kann durch Probieren aller möglichen Dreier-Kombinationen von Kollisionsmerkmalen (Crashfeatures) ein Trennungsproblem mittels Support Vektor Maschinen gelöst werden, um die beste Merkmalskombination zu ermitteln. Allerdings beschränkt sich diese Vorgehensweise darauf, nicht benötigte Merkmale aus einem bestehenden Algorithmus zu entfernen und durch die daraus resultierende Einsparung von Mikrocontroller-Ressourcen einen Kostenvorteil zu erzielen. Es können also lediglich im Algorithmus bereits existierende Merkmale so kombiniert werden, dass damit eine maximal dreidimensionale Trennung möglich ist.

Neben der Ermittlung der für eine Auslöseentscheidung benötigten Merkmale besteht auch die Notwendigkeit eine geeignete Anordnung derjenigen Sensoren im Fahrzeug zu finden, die die Daten bereitstellen, auf denen die benötigten Merkmale basieren.

Der bisherige Prozess zur Ermittlung der Sensorposition und zur Auswahl von Algorithmusmodulen ist Zeit raubend und beinhaltet noch viel Ausprobieren. Das hat zur Folge, dass selbst in einer serienstartnahen Projektphase häufig keine Aussage gemacht werden kann, ob mit der verwendeten Sensortopologie die Auslöseanforderungen vollständig erfüllt werden können. Eine weitere Folge ist, dass in jedem Steuergerät stets die volle Algorithmusfunktionalität verwendet wird, obwohl dies eigentlich unnötig ist. Damit werden unnötig Mikrocontroller-Ressourcen verschwendet.

### Offenbarung der Erfindung

Die obengenannten Schwächen werden durch die Merkmale des Verfahrensanspruchs 1 bzw 13, des Vorrichtungsanspruchs 15 und des Computerprogrammproduktanspruchs 16 aufgehoben.

Vor diesem Hintergrund wird mit der vorliegenden Erfindung ein Verfahren zur Ermittlung von Merkmalen zum Treffen einer Auslöseentscheidung eines Insassenschutzmittels eines Fahrzeugs, ein Verfahren zur Ermittlung einer Positionierung von Sensoren in einem Fahrzeug, weiterhin ein Steuergerät, das diese Verfahren verwendet sowie schließlich ein entsprechendes Computerprogrammprodukt gemäß den unabhängigen Patentansprüchen vorgestellt. Vorteilhafte Ausgestaltungen ergeben sich aus den jeweiligen Unteransprüchen und der nachfolgenden Beschreibung.

Die Erfindung basiert auf der Erkenntnis, dass sich beispielsweise ein selbstkonfigurierender Airbag-Auslösealgorithmus schaffen lässt, in dem bekannte Verfahren zur Ermittlung von Merkmalen zum Treffen einer Auslöseentscheidung dahin gehend erweitert werden, dass zunächst ermittelt wird, wie viele Dimensionen überhaupt erforderlich sind, um ein Trennungsproblem zu lösen. Im Anschluss daran kann die ermittelte Dimension beispielsweise auf zweidimensionale (2D) und dreidimensionale (3D) Klassifikatoren partitioniert werden, die dann die Auslöseentscheidung hervorrufen können.

Somit ist es auch möglich, mehr als dreidimensional zu klassifizieren, in dem die höheren Dimensionen (N>3) automatisch auf zweidimensionale und dreidimensionale Blöcke verteilt werden. Dabei müssen nicht ausschließlich Teilmodule bekannter Algorithmen verwendet werden, sondern es können beliebige Teilmodule eingesetzt werden. Ferner kann der gesamte Konfigurationsprozess des Algorithmus samt der Bestimmung aller Auslöseschwellen vollständig automatisch auf Basis von Kollisionsdaten erfolgen.

Kern der Erfindung ist die automatische Konfiguration der für die Erfüllung der Auslöseanforderungen erforderlichen Algorithmusfunktionalität. Dabei bietet der erfindungsgemäße Ansatz eine Reihe von Einzelvorteilen.

Zum einen ergibt sich eine Flexibilisierung des Entwicklungsprozesses durch eine ideale Zuschneidung der in einem Projekt benötigten Algorithmusfunktionalität, auf genau die Bedürfnisse des jeweiligen Fahrzeuges. Dabei ist eine automatische Ermittlung der benötigten Funktionalität möglich und es ergibt sich eine Einsparung von Entwicklungszeit. Auch ist eine vereinfachte Handhabung großer Datenmengen gegeben. So können nicht nur die für die Auslöseanforderung am besten geeigneten Merkmale identifiziert werden sondern es kann zugleich bestimmt werden, wie viele Dimensionen für die Lösung des Problems benötigt werden. Anschließend kann eine Partitionierung der Dimensionen, die größer als dreidimensional sind, auf zweidimensionale und dreidimensionale Blöcke stattfinden.

Dies führt zu einer Einsparung von Mikroprozessor-Ressourcen, da nicht benötigte Funktionen auch nicht verwendet werden und damit Kosten gespart werden können. Eine bessere Performance ist durch eine N-dimensionale Klassifikation möglich, wobei die Partitionierung eine einfache Architektur mit der Wiederverwendung bestehender Funktionen erlaubt.

Auch erlaubt die Partitionierung in zweidimensionale und dreidimensionale Blöcke eine bessere Interpretierbarkeit der N-Dimensionalen Klassifikation und ermöglicht daher erst den Serieneinsatz für den Algorithmus-Ingenieur. Eine solche Partitionierung ist bisher nicht vorgesehen.

Durch das Zusammenwachsen von aktiver und passiver Sicherheit werden künftig Algorithmen notwendig werden, die auch die aktive Sicherheit und damit die Fahrdynamik im Vorfeld einer Kollision berücksichtigen müssen. Die Identifikation der dafür erforderlichen Merkmale und erst recht die Bestimmung der nötigen Dimensionalität kann wegen der hohen Sensorsignalanzahl und wegen der für OS mangelnden Erfahrung mit den Signalen nur noch automatisch erfolgen. Die erforderlichen Merkmale entstammen dabei nicht einem bekannten Algorithmus, sondern werden von extern bereitgestellt bzw. müssen selbst erst berechnet werden.

Basierend auf diesen Erkenntnissen schafft die vorliegende Erfindung ein Verfahren zur Ermittlung von Merkmalen zum Treffen einer Auslöseentscheidung eines Insassenschutzmittels eines Fahrzeugs, das die folgenden Schritte umfasst: Empfangen einer Menge von Merkmalen, die zum Treffen der Auslöseentscheidung geeignet sein können, über eine Schnittstelle; Bilden einer Untermenge aus der Menge von Merkmalen gemäß einer von einem Testergebnis abhängigen Bestimmungsvorschrift, wobei das Testergebnis einer vorangegangenen Untermenge zugeordnet ist, die in einem vorangegangenen Schritt gebildet wurde; Ermitteln, ob die Untermenge zum Treffen der Auslöseentscheidung geeignet ist und Bereitstellen eines Testergebnisses, das der Untermenge zugeordnet ist; Wiederholen der Schritte des Bildens einer Untermenge und des Ermittelns, ob die Untermenge zum Treffen der Auslöseentscheidung geeignet ist, bis ein Endkriterium erfüllt ist; und Bereitstellen einer geeigneten Untermenge, die gemäß dem Endkriterium zum Treffen der Auslöseentscheidung geeignet ist.

Die Merkmale können Signale oder Daten repräsentieren die von Sensoren des Fahrzeugs bereitgestellt werden. Auch können die Merkmale aus Sensorsignalen ermittelt werden. Bei dem Insassenschutzmittel kann es sich beispielsweise um einen Airbag handeln. Gemäß dem Verfahren werden ausgehend von einer ersten Untermenge nacheinander veränderte Untermengen gebildet, die sich jeweils in der Anzahl und/oder der Zusammensetzung der enthaltenen Merkmale unterscheiden. Aufeinanderfolgend gebildete Untermengen weichen dabei nur geringfügig, z.B. nur ein einem Merkmal, voneinander ab. Für jede der Untermengen kann ein Testergebnis bestimmt werden, das eine Eignung der jeweiligen Untermenge zum Treffen der Auslöseentscheidung anzeigt. Das Testergebnis kann jeweils unter Einsatz eines lernbasierten Klassifikators ermittelt werden. Beispielsweise kann das Testergebnis eine ersten Wert aufweisen, wenn sich eine Merkmalskombination zum Treffen der Auslöseentscheidung eignet und einen zweiten Wert aufweisen, wenn sich die Merkmalskombination nicht eignet. Ferner kann das Testergebnis eine Bewertung bezüglich der Eignung aufweisen, die es ermöglicht, unterschiedliche Merkmalskombinationen miteinander zu vergleichen. Durch das erfindungsgemäße Verfahren können diejenigen Merkmale aus der Menge von Merkmalen aussortiert werden, die sich zum Treffen der Auslöseentscheidung nicht geeignet bzw. nicht nötig sind. Somit weist die geeignete Untermenge eine geringere Anzahl von Merkmalen auf, als in der Menge von Merkmalen enthalten sind.

Das erfindungsgemäße Verfahren kann auch einen Schritt des Bereitstellens einer Dimension der geeigneten Untermenge umfassen. Die Dimension kann für eine nachfolgende Partitionierung der Untermenge genutzt werden.

Gemäß einer ersten Ausgestaltung kann die Untermenge gemäß der Bestimmungsvorschrift gebildet werden, indem aus der vorangegangenen Untermenge ein Merkmal entfernt wird, wenn das der vorangegangenen Untermenge zugeordnete Testergebnis anzeigt, dass die vorangegangene Untermenge zum Treffen der Auslöseentscheidung geeignet ist. Auf diese Weise können aus einer ersten Untermenge fortlaufend Merkmale entnommen werden, bis nur noch die zum Treffen der Auslöseentscheidung erforderlichen Merkmale übrig sind.

Entsprechend dazu kann die Untermenge gemäß der Bestimmungsvorschrift gebildet werden, indem der vorangegangenen Untermenge ein entferntes Merkmal wieder zugefügt und stattdessen ein anderes Merkmal entfernt wird, wenn das der vorangegangenen Untermenge zugeordnete Testergebnis anzeigt, dass die vorangegangene Untermenge nicht zum Treffen der Auslöseentscheidung geeignet ist. Auf diese Weise kann die Entnahme eines Merkmals, das zum Treffen der Auslöseentscheidung erforderlich ist, wieder rückgängig gemacht werden.

Dabei kann es sich bei dem anderen Merkmal um ein Merkmal handeln, das in vorangegangenen Schritten noch nicht entnommen und wieder zugefügt wurde. Somit kann eine wiederholte Entnahme eines sich als erforderlich erwiesenen Merkmals vermieden werden.

Das Endkriterium kann erfüllt sein, wenn das der vorangegangenen Untermenge zugeordnete Testergebnis anzeigt, dass die vorangegangene Untermenge nicht zum Treffen der Auslöseentscheidung geeignet ist und sich gemäß der Bestimmungsvorschrift keine weitere Untermenge bilden lässt. Die geeignete Untermenge kann dann die zuletzt gebildete vorangegangene Untermenge sein, die gemäß dem Testergebnis zum Treffen der Auslöseentscheidung geeignet ist. Dieses Endkriterium eignet sich für eine Vorgehensweise, bei der die geeignete Untermenge durch eine fortlaufende Reduzierung einer Merkmalsmenge ermittelt wird, die ursprünglich größer als erforderlichen ist.

Gemäß einer weiteren Ausgestaltung kann die Untermenge gemäß der Bestimmungsvorschrift gebildet werden, indem der vorangegangenen Untermenge ein weiteres Merkmal aus der Menge von Merkmalen zugefügt wird, wenn das der vorangegangenen Untermenge zugeordnete Testergebnis anzeigt, dass die vorangegangene Untermenge nicht zum Treffen der Auslöseentscheidung geeignet ist. Dabei kann das weitere Merkmal gemäß einer vorbestimmten Auswahlvorschrift aus der Menge von Merkmalen ausgewählt werden. Auf diese Weise können einer ersten Untermenge fortlaufend Merkmale hinzugefügt werden, bis die zum Treffen der Auslöseentscheidung erforderlichen Merkmale in der Untermenge enthalten sind.

Das Endkriterium kann erfüllt sein, wenn das der Untermenge zugeordnete Testergebnis anzeigt, dass die Untermenge zum Treffen der Auslöseentscheidung geeignet ist. Dieses Endkriterium eignet sich für eine Vorgehensweise, bei der die geeignete Untermenge durch eine fortlaufende Erhöhung einer ursprünglich zu kleinen Merkmalsmenge ermittelt wird.

Gemäß einer weiteren Ausgestaltung kann zum Bestimmen der Untermenge eine statistische Analyse durchgeführt werden. Die statistische Analyse eignet sich beispielsweise um eine Vorauswahl einer Untermenge zu treffen. Als statistische Analyse kann beispielsweise eine Hauptkomponenten-Analyse (PCA - Principle Compont Analysis) durchgeführt werden.

Das erfindungsgemäße Verfahren kann ferner einen Schritt des Aufteilens der Merkmale der geeigneten Untermenge in Blöcke gemäß einer ersten Aufteilungsvorschrift und gemäß mindestens einer weiteren Aufteilungsvorschrift und einen Schritt des Prüfens, ob die gemäß der ersten Aufteilungsvorschrift und die gemäß der mindestens einen weiteren Aufteilungsvorschrift aufgeteilten Merkmale jeweils zum Treffen der Auslöseentscheidung geeignet sind und des Bereitstellens eines ersten und mindestens eines weiteren Prüfergebnisses umfassen. Auf diese Weise kann die geeignete Untermenge auf geeignete Weise partitioniert werden. Damit besteht die Möglichkeit der funktionalen Clusterung. Der Partitionierungsalgorithmus kann bevorzugt orthogonale Merkmale, die den höchsten Informationsgehalt haben, einander zuordnen. Ein weiterer Vorteil der Partitionierung ist die Wiederverwendung bestehender Software-Module. Dies spart Speicher, beispielsweise ROM ein und hält die Software-Architektur übersichtlich.

Beispielsweise können die Blöcke jeweils zwei oder drei Merkmale der geeigneten Untergruppe aufweisen. Das Partitionieren der N>3 Dimensionen auf zweidimensionale und dreidimensionale Blöcke kann wegen der besseren Interpretierbarkeit der Trainingsergebnisse erfolgen. Herunter gebrochen auf zwei- und dreidimensionale Teilprobleme kann das Ergebnis nämlich noch sinnvoll beurteilt werden.

Das Verfahren kann ferner einen Schritt des Vergleichens des ersten und des mindestens einen weiteren Prüfungsergebnisses mit dem Testergebnis der geeigneten Untermenge und einen Schritt des Bereitstellens einer Vergleichsinformation umfassen, die anzeigt ob das erste Prüfergebnis oder das mindestens eine weitere Prüfergebnis eine geringere Abweichung von dem Testergebnis der geeigneten Untermenge aufweist. Somit kann aus der Vielzahl der Partitionierungsmöglichkeiten die geeignetste ausgewählt werden.

Der vorliegenden Erfindung kann ferner eingesetzt werden, um eine optimale Sensortopologie zu ermitteln, basierend auf der die für die Merkmale erforderlichen Daten ermittelt werden.

Dem liegt die Tatsache zugrunde, dass eine Sensortopologie verworfen werden kann, wenn mittels eines automatischen, lernbasierten Klassifikators, hier vorteilhafterweise die Support Vektor Maschine (SVM), nicht alle Anforderungen erfüllt werden können. Es wird unterstellt, dass ein herkömmlicher Algorithmus hierzu auch nicht in der Lage wäre. Insofern wird dadurch das Risiko minimiert, dass ein Trennungsproblem nicht erst kurz vor Serienstart als mit der vorhandenen Sensorik nicht lösbar erkannt wird. Darüber hinaus können für eine einmal ermittelte Sensortopologie im Anschluss daran die optimalen Sensoreinbauorte durch eine Vielzahl an numerischen Experimenten automatisch bestimmt werden. Auf Basis der ermittelten Sensoreinbauorte kann in einem letzten Schritt festgelegt werden, welche Teilalgorithmen verwendet werden können (Side PAS, Side Druck, Side Combined, Merkmalsberechnungsmodul 1, Merkmalsberechnungsmodul 4, ...). Damit kann eine bessere Abschätzung der Steuergeräteressourcen bereits in einer frühen Projektphase erfolgen.

Somit besteht ein weiterer Kern der Erfindung in der Flexibilisierung des Entwicklungsprozesses und der Einsparung von Mikrokontroller-Ressourcen. Dabei ergeben sich eine Reihe von Einzelvorteilen. Zum einen wird eine Verkürzung des Entwicklungsprozesses durch eine frühzeitige Festlegung der Sensortopologie ermöglicht. Auch kann eine Vermeidung von Iterationen im Entwicklungsprozess und damit eine Kosteneinsparung erreicht werden. Auch kann eine Reduktion des Risikos der Nichterfüllung von Auslöseanforderungen erst kurz vor Serienstart erfolgen und es kann schon früh entschieden werden, welche Algorithmusteile benötigt werden. In Kopplung mit dem Airbag kann auch bereits entschieden werden, welche Zusatzfunktionen im Frontalgorithmus benötigt werden. Dies führt zu einer Kosteneinsparung, einer Einsparung von Entwicklungszeit und ermöglicht eine Unterstützung des Quoting-Prozesses. Die Verwendung der Support Vektor Maschine ist vorteilhaft, da dieses Verfahren stets die optimale Lösung liefert und relativ wenig zum Spezialisieren neigt

Entsprechend dazu schafft die vorliegende Erfindung ein Verfahren zur Ermittlung einer Positionierung von Sensoren in einem Fahrzeug, das die folgenden Schritte umfasst: Empfangen einer Menge von Merkmalen, die zum Treffen einer Auslöseentscheidung eines Insassenschutzmittels des Fahrzeugs geeignet sein können, über eine Schnittstelle, wobei die Merkmale jeweils Sensoren zugeordnet werden können, die an unterschiedlichen Positionen im Fahrzeug angeordnet sind; Ermitteln einer geeigneten Untermenge aus der Menge von Merkmalen, wobei die in der geeigneten Untermenge enthaltenen Merkmale zum Treffen der Auslöseentscheidung geeignet sind; und Auswerten der geeigneten Untermenge, um Positionen derjenigen Sensoren zu ermitteln, deren Merkmale zum Treffen der Auslöseentscheidung geeignet sind.

Die geeignete Untermenge kann dabei gemäß dem erfindungsgemäßen Verfahren zur Ermittlung von Merkmalen zum Treffen einer Auslöseentscheidung eines Insassenschutzmittels eines Fahrzeugs ermittelt werden.

Auch durch die Ausführungsvariante der Erfindung in Form eines Steuergeräts kann die der Erfindung zugrunde liegende Aufgabe schnell und effizient gelöst werden. Unter einem Steuergerät kann vorliegend ein elektrisches Gerät verstanden werden, das Sensorsignale verarbeitet und in Abhängigkeit davon Steuersignale ausgibt. Das Steuergerät kann eine Schnittstelle aufweisen, die hardund/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert ist und zur Durchführung des Verfahrens nach einem der vorstehend beschriebenen Ausführungsformen verwendet wird, wenn das Programm auf einem Steuergerät ausgeführt wird.

Die Erfindung wird nachstehend anhand der beigefügten Zeichnungen beispielhaft näher erläutert. Es zeigen:
- Fig. 1: ein Blockschaltbild eines Verfahrens zur Ermittlung von Merkmalen zum Treffen einer Auslöseentscheidung eines Insassenschutzmittels, gemäß einem Ausführungsbeispiels der Erfindung;
- Fig. 2: ein Blockschaltbild einer erfindungsgemäßen Skalierungseinrichtung;
- Fig. 3: ein Blockschaltbild einer erfindungsgemäßen Aufteilungseinrichtung, für das Offline-Verfahren;
- Fig. 4: ein Blockschaltbild eines weiteren Ausführungsbeispiels der Erfindung; und
- Fig. 5: ein Blockschaltbild eines Verfahrens zur Ermittlung einer Positionierung von Sensoren, gemäß einem Ausführungsbeispiel der Erfindung.

Gleiche oder ähnliche Elemente können in den nachfolgenden Figuren durch gleiche oder ähnliche Bezugszeichen versehen sein. Ferner enthalten die Figuren der Zeichnungen, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht explizit beschriebenen Kombinationen zusammengefasst werden können.

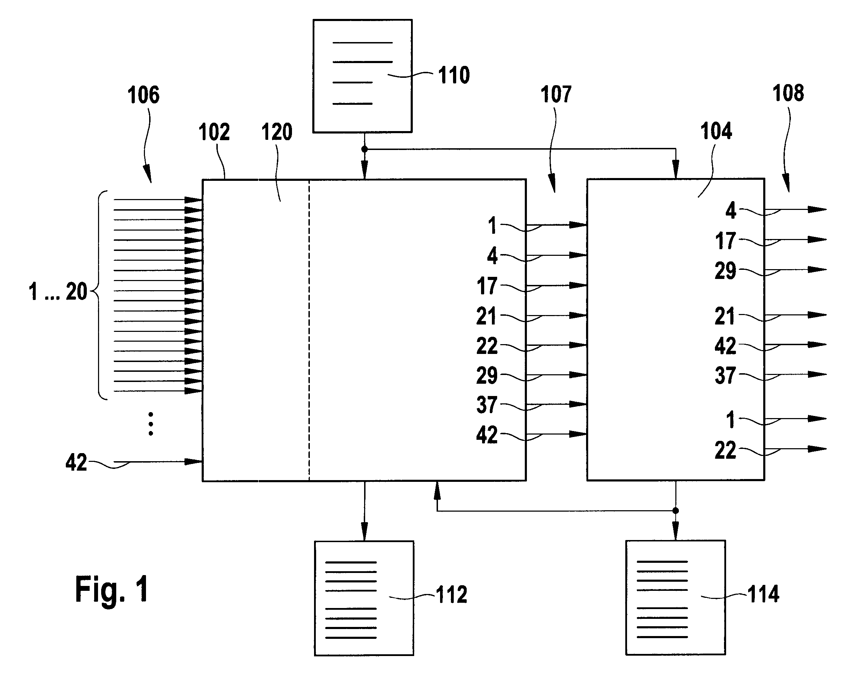

Fig. 1 zeigt ein Blockschaltbild zur Veranschaulichung eines Verfahrens zur Ermittlung von Merkmalen zum Treffen einer Auslöseentscheidung eines Insassenschutzmittels, gemäß einem Ausführungsbeispiels der Erfindung. Gezeigt ist eine Skalierungseinrichtung (Skaler) 102 und eine Aufteilungseinrichtung (Splitter) 104. Die Skalierungseinrichtung 102 ist ausgebildet um eine Menge 106 von Merkmalen zu empfangen und aus der Menge 106 von Merkmalen notwendige Merkmalskombinationen 107 zu ermitteln und an die Aufteilungseinrichtung 104 bereitzustellen. Die notwendigen Merkmalskombinationen 107 zeichnen sich dadurch aus, dass sie die zum Treffen der Auslöseentscheidung erforderlichen Merkmale aufweisen. Die Aufteilungseinrichtung 104 ist ausgebildet, um die notwendige Merkmalskombinationen 107 zu gruppieren und als gruppierte Merkmalskombinationen 108 bereitzustellen.

Die Skalierungseinrichtung 102 ist ferner ausgebildet, um zu Ermitteln, wie viele Dimensionen nötig sind, um Auslöseanforderungen 110 zu erfüllen und welche Merkmale der Menge 106 von Merkmalen dazu nötig sind. Die Auslöseanforderungen 110 können an die Skalierungseinrichtung 102 bereitgestellt werden. Über die Auslöseanforderungen 110 kann die Auslöseentscheidung des Insassenschutzmittels definiert werden. Bei der Ermittlung der notwendigen Merkmalskombinationen 107 und der zugehörigen Dimension können erste Trainingsergebnisse 112 gewonnen und von der Skalierungseinrichtung 102 bereitgestellt werden.

Die Aufteilungseinrichtung 104 ist ausgebildet, um eine Aufteilung der ermittelten Merkmale 107 auf zweidimensionale und dreidimensionale Blöcke durchzuführen. Bei der Aufteilung können zweite Trainingsergebnisse 114 gewonnen und von der Aufteilungseinrichtung 104 bereitgestellt werden.

Die Auslöseanforderungen 110 können ferner an die Aufteilungseinrichtung 104 bereitgestellt werden. Dies ist insbesondere dann sinnvoll, wenn die Auslöseanforderungen 110 auch in der Aufteilungseinrichtung 104 optional benötigt werden.

Ferner können in der Aufteilungseinrichtung 104 ermittelte Daten an die Skalierungseinrichtung 102 zurückgeführt werden. Beispielsweise kann eine Verbindung vorgesehen sein, um die zweiten Trainingsergebnisse 114 an die Skalierungseinrichtung 102 bereitzustellen. Somit wird optional eine Möglichkeit geboten, für den Fall, das nach der Aufteilungseinrichtung 104 (z.B. 3x 3D und 1x 2D) die Performance 114 nicht mehr so gut ist wie in den ersten Trainingsergebnissen 112 ermittelt. In diesem Falle müssen mehr Dimensionen verwendet werden als in der Skalierungseinrichtung 102 berechnet, um die Performance-Verluste durch die in der Aufteilungseinrichtung 104 vorgenommene Splittung wieder auszugleichen.

Gemäß einem weiteren Ausführungsbeispiel kann vor der Skalierungseinrichtung 102 optional eine Untermenge von Merkmalen ausgewählt werden. Dies kann z.B. mittels einer Hauptkomponenten-Analyse erfolgen. Dazu kann die Skalierungseinrichtung 102 eine Vorauswahleinrichtung 120 aufweisen, in der eine Vorauswahl einer Untermenge getroffen werden kann.

Gemäß diesem Ausführungsbeispiel ist die Skalierungseinrichtung 102 ausgebildet, um zweiundvierzig Merkmale 106 zu empfangen. Aus der Menge 106 von Merkmalen werden acht Merkmale als notwendige Merkmale 107 ermittelt. Dabei handelt es sich um die Merkmale 1, 4, 17, 21, 22, 29, 37, 42. Somit sind die notwendigen Merkmale 107 achtdimensional. Die Aufteilungseinrichtung 104 ist ausgebildet, um die notwendigen Merkmale 107 in zwei dreidimensionale Blöcke und einen zweidimensionalen Block aufzuteilen. Der erste dreidimensionale Block weist die Merkmale 4, 17, 29, der zweite dreidimensionale Block weist die Merkmale 21, 42, 37 und der zweidimensionale Block weist die Merkmale 1, 22 auf. Somit sind die Skalierungseinrichtung 102 und die Aufteilungseinrichtung 104 zur Ermittlung der benötigten Merkmale 107 und zur Verteilung dieser Merkmale 107 auf eindimensionale, zweidimensionale und dreidimensionale Blöcke 108 geeignet. Alternativ können die Merkmale 107 auch bezügliche anderer Dimensionen aufgeteilt werden, wenn dies für die Weiterverarbeitung vorteilhaft ist.

In Fig. 1 ist sowohl der Ablauf der Selektion als auch der Ablauf der Partitionierung der Merkmale 106 gezeigt. Die Ermittlung der zur Lösung eines Trennungsproblems notwendigen Merkmale 107, also auch die Dimension der Klassifizierung, erfolgt in der Skalierungseinrichtung 102. Die Skalierungseinrichtung 102 wählt aus den beispielsweise zweiundvierzig Eingangsmerkmalen 106 genau die für die Auslöseanforderungen 110 benötigten Merkmale 107 aus. Hier zeigt sich der Vorteil der Flexibilisierung, da die Dimension und die Merkmale 107 direkt von den projektspezifischen Auslöseanforderungen 110 abhängig sind. Die Auslöseanforderungen 110 können neben der Auslösezeit auch Robustheitsanforderungen oder die Linearität der Auslöseentscheidung beinhalten. Der Skalierungseinrichtung 102 kann die Aufteilungseinrichtung nachgeschaltet sein.

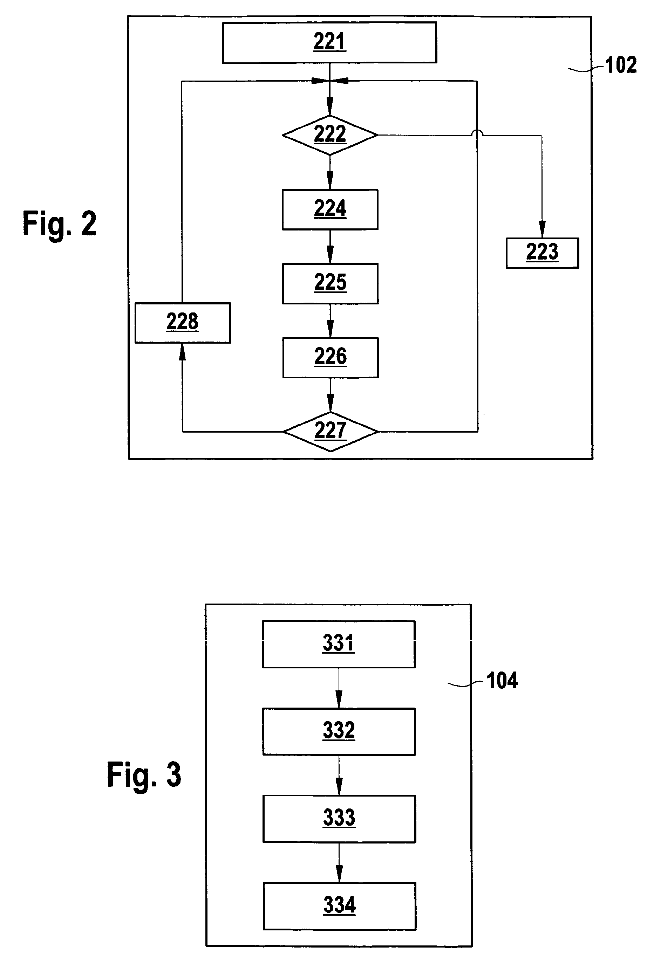

Fig. 2 zeigt ein Ablaufdiagramm einer Funktionalität der Skalierungseinrichtung 102 gemäß einem Ausführungsbeispiel der vorliegenden Erfindung.

In einem ersten Schritt 221 erfolgt ein Start des erfindungsgemäßen Verfahrens mit allen Merkmalen oder einer sinnvollen Untermenge davon. In einem weiteren Schritt 222 wird geprüft, ob noch nicht entnommene Merkmale existieren. Ist dies nicht der Fall, so folgt ein Abbruch 223 des Verfahrens. Existieren noch nicht entnommene Merkmale so wird in einem weiteren Schritt 224 ein noch nicht entnommenes Merkmal entnommen. In einem nächsten Schritt 225 wird eine Merkmalsliste gespeichert. Falls die Auslöseanforderungen erfüllbar sind, so sind in der Merkmalsliste alle dafür nötigen Merkmale enthalten. In einem weiteren Schritt 226 erfolgt ein Trainieren und Testen. In einem nachfolgenden Schritt 227 wird überprüft, ob die Auslöseanforderungen noch erfüllt sind. Ist die Auslöseanforderungen erfüllt, so wird zum Schritt 222 zurückgesprungen. Ist die Auslöseanforderungen nicht erfüllt, so wird in einem Schritt 228 das im Schritt 224 entnommenes Merkmal wieder hinzu gefügt. Anschließend wird zum Schritt 222 zurückgesprungen.

Anhand eines Ausführungsbeispiels wird das Prinzip der Skalierungseinrichtung 102 im Folgenden noch einmal genauer erklärt. Die Skalierungseinrichtung 102 weist gemäß diesem Ausführungsbeispiel einen lernbasierten Klassifikator auf. Der lernbasierte Klassifikator kann beispielsweise auf einem neuronalen Netz, einem Hidden Markov Model, einer Support Vektor Maschine oder einem Entscheidungsbaum basieren. Zunächst erfolgt die Klassifikation mit allen Merkmalen oder mit einer begrenzten Untermenge davon. Die begrenzte Untermenge, hier kann z.B. eine initiale Untermenge mittels einer Hauptkomponenten-Analyse ermittelt werden, kann beispielsweise zehn Merkmale aufweisen. Die Untermenge kann frei gewählt werden und könnte z.B. von den zur Verfügung stehenden Systemressourcen abhängen. Aus dieser Menge werden nacheinander so lange Merkmale entnommen, wie die Anforderungen erfüllt sind. Ausgehend von der vollen Menge wird in einer Liste der möglichen Merkmale zunächst ermittelt, ob noch nicht entnommene Merkmale darin enthalten sind. Das wird im ersten Schritt immer der Fall sein. Anschließend wird ein beliebiges Merkmal aus der Liste entnommen und die resultierende Liste wird abgespeichert. Mit den in der Liste stehenden Merkmalen wird anschließend der lernbasierte Klassifikator trainiert. Anschließend wird getestet, ob alle Anforderungen noch erfüllt wurden.

Ist dies nicht der Fall, so ist das Problem mit der gewählten Untermenge an Merkmalen nicht lösbar. Das entnommene Merkmal wird also der Liste wiederhinzugefügt und ein anderes Merkmal wird entnommen.

Sind alle Anforderungen nach Entnahme des ersten Merkmals noch erfüllt, so ist das Problem mit dieser Untermenge lösbar und die Untermenge kann weiter reduziert werden. Es kann also nach oben zurück gesprungen werden und ein weiteres Merkmal entnommen werden.

Dieser Prozess wird so lange fortgesetzt, bis keine Merkmale im Topf verblieben sind, die nicht bereits entnommen wurden. Dann erfolgt der Abbruch. Falls das Trennungsproblem lösbar ist, sind in der Liste der gespeicherten Merkmale damit automatisch genau diejenigen, i.d.R. N>3 Merkmale, enthalten, die benötigt werden.

Alternativ kann auch die umgekehrte Vorgehensweise für die Skalierungseinrichtung 102 gewählt werden. Ausgehend von zwei Merkmalen wird nacheinander so lange ein weiteres Merkmal hinzugenommen, bis die Anforderungen erstmals erfüllt sind. Dabei kann die Reihenfolge, in der die Merkmale nacheinander hinzugenommen werden, je nach Schwerpunkt unterschiedlich sein. Liegt der Fokus auf Robustheit, könnten die Merkmale in einer anderen Reihenfolge hinzugefügt werden, als wenn es darum geht, in jedem Fall die Anforderungen zu erfüllen. In diesem Fall wäre der Fokus beispielsweise auf der Performance.

Unabhängig davon, ob das Verfahren der Entnahme oder das Verfahren des Hinzufügens von Merkmalen gewählt wird, wird jeweils die minimal nötige Merkmalsmenge bestimmt. Das Training mit dieser minimalen Merkmalsanzahl erzeugt eine Ergebnisdatei mit den in Fig. 1 gezeigten ersten Trainingsergebnissen 112 am Ende der Ausführung der Skalierungseinrichtung.

Fig. 3 zeigt ein Ablaufdiagramm einer Funktionalität der Aufteilungseinrichtung 104 gemäß einem Ausführungsbeispiel der vorliegenden Erfindung.

In einem ersten Schritt 331 erfolgt ein Start des in der Aufteilungseinrichtung 104 ausgeführten Teils des erfindungsgemäßen Verfahrens. In einem weiteren Schritt 332 werden die von der Skalierungseinrichtung erhaltenen notwendigen Merkmale in dreidimensionale und zweidimensionale Kombinationen aufgeteilt. Im Folgenden 333 wird für alle Aufteilungen i, der N notwendigen Merkmale in dreidimensionale und zweidimensionale Kombinationen, das in Fig. 1 gezeigte zweite Testergebnis (i) 114 ermittelt. In einem weiteren Schritt 334 erfolgt ein Finden derjenigen Aufteilung K, für die das zweite Testergebnis (K) minimal von dem in Fig. 1 gezeigten ersten Testergebnis 112 abweicht.

Anhand eines Ausführungsbeispiels wird die Funktionalität der Aufteilungseinrichtung 104 Im Folgenden näher beschrieben. Zunächst werden in der Aufteilungseinrichtung 104 die acht in Fig. 1 gezeigten Merkmale auf zwei- und dreidimensionale Blöcke verteilt. Dabei könnten zum Beispiel immer so viele dreidimensionale Blöcke gebildet werden wie möglich sind und der Rest kann mit zweidimensionalen Blöcken abgedeckt werden. Für N=8 werden im Fig. 1 gezeigten Beispiel zwei Blöcke mit je drei Merkmalen und ein Block mit zwei Merkmalen gebildet. Ebenso wäre es möglich, vier Blöcke mit je zwei Dimensionen zu bilden. Andere Aufteilungen sind ebenfalls möglich. Die gewählte Aufteilung wird nun festgehalten und nicht mehr verändert. Im nächsten Schritt des Beispiels wird eine erste Aufteilung der z. B. acht Merkmale auf die drei Unterblöcke vorgenommen und die drei Unterblöcke, die jeder wieder einen lernbasierten Klassifikator enthalten, werden wieder gegen die Auslöseanforderungen trainiert. Das zweite Trainingsergebnis (i) der gerade verwendeten Partitionierung i wird in einer Ergebnisdatei abgespeichert. Dieser Schritt wird für alle oder, zur Einsparung von Trainingszeit, für eine Untermenge der möglichen Partitionierungen durchgeführt. Am Ende werden die Ergebnisse aller Partitionierungen mit den Trainingsergebnissen am Ausgang der Skalierungseinrichtung verglichen und genau diejenige Partitionierung K wird ausgewählt, deren zweite Trainingsergebnisse (K) den ersten Trainingsergebnissen aus Fig. 1 am nächsten kommen. Am Ausgang der Aufteilungseinrichtung 104 in Fig. 1 sind somit drei trainierte Klassifikatoren, z.B. Neuronale Netze oder Support Vektor Maschinen vorhanden, denen die besten Merkmalskombinationen zugeordnet sind und die mindestens notwendig sind, um das Trennungsproblem vom Anfang bestmöglich zu lösen.

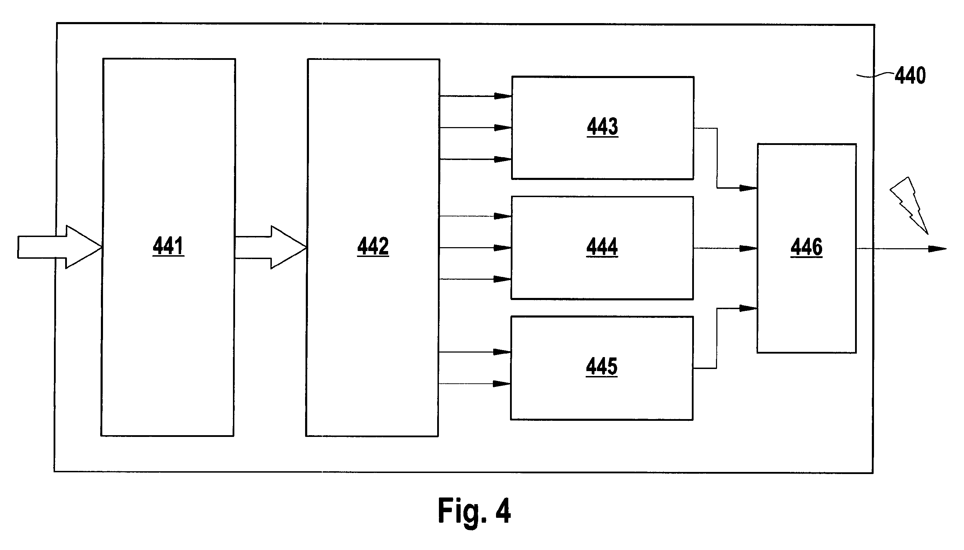

Fig. 4 zeigt eine mögliche Umsetzung des erfindungsgemäßen Ansatzes in einem Steuergerät 440. Über eine Sensorschnittstelle 441 können einem Merkmalsberechner 442 Sensordaten zugeführt werden. Der Merkmalsberechner 442 ist ausgebildet, um die erfindungsgemäß als notwendige Merkmale eingestuften Merkmale aus den Sensordaten zu berechnen und entsprechend der erfindungsgemäß als geeignet ermittelten Aufteilung in Blöcke aufzuteilen. Jede Gruppe von notwendigen Merkmalen kann anschließend an einen zugeordneten Klassifikatoren 443, 444, 445 bereitgestellt werden. Gemäß diesem Ausführungsbeispiel sind die Klassifikatoren 443. 444 dreidimensional und der Klassifikator 445 zweidimensional ausgeführt. Die Klassifikatoren 443, 444, 445 können auf Mehrklassen-Support Vektor Maschinen (MSVM) basieren. Die Klassifikatoren 443, 444, 445 sind ausgangsseitig mit einer Logik-Kombinationseinrichtung 446 verbunden. Die Logik-Kombinationseinrichtung 446 kann eine Auslöseentscheidung für ein Insassenschutzmittel bereitstellen.

Im Folgendein wird die Funktionalität des in Fig. 4 gezeigte Steuergerät 440 ausführlich erläutert. Ergebnis des im Labor stattfindenden Trainings in der Skalierungseinrichtung und der Aufteilungseinrichtung sind die in Fig. 4 dargestellten Elemente 443, 444, 445 sowie die von diesen Elementen 443, 444, 445 empfangenen Merkmale. Dabei handelt es sich genauer gesagt, um die trainierten Klassifikatoren 443, 444, 445 sowie die diesen zugeordneten acht mindestens benötigten und ideal auf die Klassifikatoren 443, 444, 445 verteilten Merkmale

Die abschließende Logik-Kombination 446 ist abhängig von der Art des Klassifizierungsproblems sowie der angewendeten Aufteilung-Methode.

Für die Logik-Kombination 446 kann eine UND-Verknüpfung als einfache Zusammenführung von Teilentscheidungen zu einer Gesamtentscheidung eingesetzt werden.

Alternativ kann eine ADVANCED-Logik zur erweiterten Verknüpfung der vorliegenden Teilentscheidungen eingesetzt werden. Beispielsweise ist dabei eine Verbindung einer im Klassifikator 443 klassifizierten Kollisionsschwere (3D-SVM/-MSVM) mit einem im Klassifikator 444 klassifizierten Kollisionstyp (3D-SVM/MSVM) und einer im Klassifikator 445 klassifizierten Kollisionsgeschwindigkeit ( 2D-SVM/-MSVM) möglich. D.h. im Splitter 104 sollte die Art von Anforderungen optional zusätzlich berücksichtigt werden.

Damit hat sich der Algorithmus automatisch selbst konfiguriert. Nach wie vor erforderlich sind das Sensorinterface 441 zum Erfassen der Sensordaten, die Merkmalsberechnung 442, in der die Merkmale berechnet werden, sowie die logische Kombination 446 der Klassifikationsergebnisse der einzelnen Klassifikatoren 443, 444, 445. In dem in Fig. 4 gezeigten Beispiel kommen Mehrklassen-Support Vektor Maschinen zum Einsatz.

Im Folgenden wird das erfindungsgemäße Verfahren zur Ermittlung einer Positionierung von Sensoren in einem Fahrzeug beschrieben.

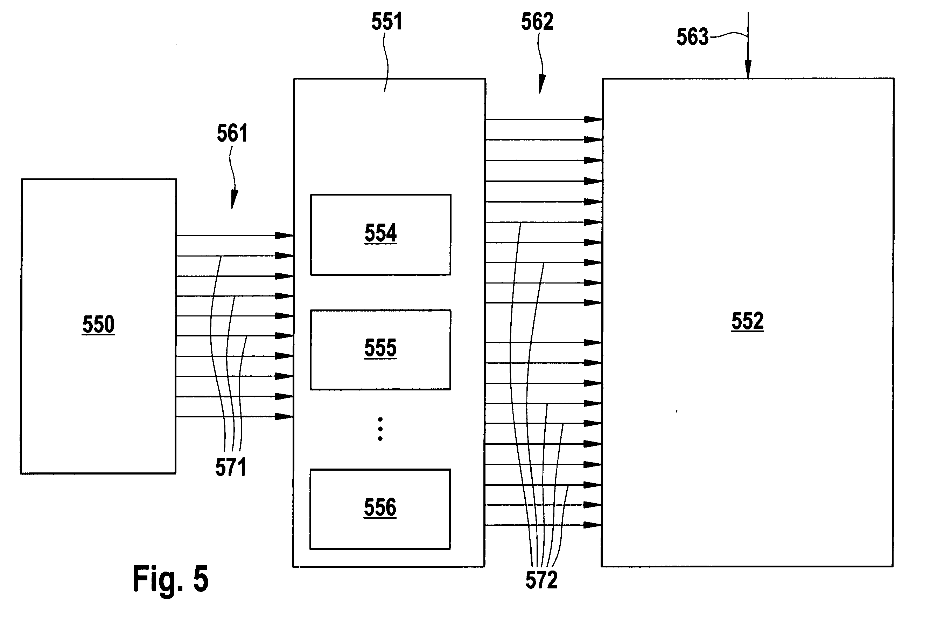

Fig. 5 zeigt in einem Blockschaltbild eine automatische Selektion von Sensorpositionen und zu verwendenden Merkmalen, gemäß einem Ausführungsbeispiel der vorliegenden Erfindung. Dabei kann das erfindungsgemäße Verfahren zur Ermittlung einer Positionierung von Sensoren in einem Fahrzeug ausgeführt werden.

Gezeigt sind Sensoren 550, eine Einrichtung 551 zur Merkmalsbildung und eine Einrichtung 552 zur Klassifikation und Selektion. Die Einrichtung 551 zur Merkmalsbildung kann eine Mehrzahl von Merkmalsmodulen aufweisen, von denen beispielhaft ein erstes Merkmalsmodul 554, ein zweites Merkmalsmodul 555 und ein N-tes Merkmalsmodul 556 gezeigt sind.

Die Sensoren 550 können an unterschiedlichen Positionen im Kraftfahrzeug angeordnet sein und ausgebildet sein, um Sensordaten 561 an die Einrichtung 551 zur Merkmalsbildung bereitzustellen. Die Einrichtung 551 zur Merkmalsbildung kann ausgebildet sein, um aus den Sensordaten 561 Merkmale zu bilden und an die Einrichtung 552 zur Klassifikation und Selektion bereitzustellen. Die Einrichtung 552 zur Klassifikation und Selektion ist ausgebildet, um die Klassifikation der Merkmale 562 beispielsweise basierend auf einer Support Vektor Maschine oder einem neuronalem Netz durchzuführen. Ferner kann die Einrichtung 552 zur Klassifikation und Selektion ausgebildet sein, um eine Selektion der besten Merkmale bzw. der besten Sensorpositionen durchführen. Die Klassifikation und Selektion kann basierend auf Auslöseanforderungen 563 erfolgen, die an die Einrichtung 552 bereitgestellt werden.

Gemäß diesem Ausführungsbeispiel werden dadurch die Sensoren, die die Sensordaten 571 bereitstellen, als am besten positionierte Sensoren selektiert. Ferner werden das erste Merkmalsmodul 554 und das N-te Merkmalsmodul 556 sowie die Merkmale 572 als erforderlich bestimmt.

Im Folgenden wird das in Fig. 5 gezeigte Prinzip detailliert beschrieben. Aus einer Vielzahl von entweder real gemessenen Sensordaten 561 oder z.B. FEMsimulierten Sensorkanälen werden Merkmale 562 gebildet. Dies kann beispielsweise durch Filterung, z.B. im ersten Merkmalsmodul 554 oder durch Integration, z.B. im zweiten Merkmalsmodul 554 erfolgen. Diese Vielzahl an Merkmalen wird dem Klassifikator 552, vorteilhafterweise hier als Support Vektor Maschine ausgebildet, zur Verfügung gestellt. Der Klassifikator 552 bekommt Auslöseanforderungen 563 gestellt, zum Beispiel die "Time to fire". Durch den automatischen Prozess der Selektion 552 der besten Merkmale werden zwei Dinge erreicht.

Zum einen kann die beste Sensorposition bestimmt werden, die in Fig. 5 durch die Sensordaten 571 dargestellt ist, da das beste Merkmal einer bestimmten Sensorposition entspringen muss.

Zum anderen werden die Merkmale 562 in den verschiedensten Algorithmusmodulen 554, 555, 556 berechnet. Durch die Auswahl der benötigten Merkmale 572 wird automatisch festgelegt, welche Merkmale 572 und damit welche der Algorithmusteile 554, 555, 556 überhaupt benötigt werden. In Fig. 5 sind dies die Module 554, 556. Alle anderen Algorithmusmodule 554 sind prinzipiell nicht erforderlich, um die Auslöseanforderungen zu erfüllen und können daher entfallen.

Gelingt es der Support Vektor Maschine 552 nicht, das Trennungsproblem zu lösen, so ist keine der Sensorpositionen oder keine der Merkmalsbildungsfunktionen geeignet. Dies erlaubt den Rückschluss, dass entweder die Algorithmusfunktionalität das Problem nicht lösen kann, es also zu komplex für einen bestehenden Algorithmus ist oder dass die Sensorpositionen nicht ausreichend gut gewählt sind.

Eine Lösung könnte hier das Hinzunehmen weiterer Sensorpositionen sein. Interessant ist dies zum Beispiel für die Beantwortung der Frage, ob Upfront-Sensoren benötigt werden, um einen bestimmten Anforderungssatz des Kunden erfüllen zu können.

Alternativ können neben einer Support Vektor Maschine prinzipiell auch andere lernbasiert Verfahren eingesetzt werden. Ferner ist der Einsatz einer Mehrklassen-Support Vektor Maschine möglich und es können neuronale Netze eingesetzt werden.

Die erfindungsgemäßen Ansätze können beispielsweise in jedem Airbagprojekt Gewinn bringend eingesetzt werden. Jedes Projekt ist dabei von neuem mit der Aufgabe konfrontiert, die richtige Sensorposition und Algorithmusfunktionalität zu bestimmen. Dies soll jeweils unter der Randbedingung des geringstmöglichen Ressourceneinsatz erreicht werden. Insbesondere ist der erfindungsgemäße Ansatz speziell auch für eine Kombination von aktiven und passiven Unfalldaten prädestiniert.

Auch wenn beispielhaft hauptsächlich eine Dimensionierung auf zweidimensionale und dreidimensionale Klassifikatoren beschrieben wurde, so ist der erfindungsgemäße Ansatz auch für Klassifikatoren anderer Dimensionen einsetzbar. Dabei sind auch eindimensionale Klassifikatoren optional möglich.

Die beschriebenen Ausführungsbeispiele sind nur beispielhaft gewählt und können miteinander kombiniert werden. Auch können einzelne Verfahrensschritte mehrfach oder in einer anderen Reihenfolge ausgeführt werden.

## Patentansprüche

1. Verfahren zur Ermittlung von Merkmalen zum Treffen einer Auslöseentscheidung eines Insassenschutzmittels eines Fahrzeugs, das die folgenden Schritte umfasst:
Empfangen einer Menge von Merkmalen (106), die zum Treffen der Auslöseentscheidung geeignet sein können, über eine Schnittstelle;
Bilden einer Untermenge aus der Menge von Merkmalen gemäß einer von einem Testergebnis (112) abhängigen Bestimmungsvorschrift, wobei das Testergebnis einer vorangegangenen Untermenge zugeordnet ist, die in einem vorangegangenen Schritt gebildet wurde;
Ermitteln, ob die Untermenge zum Treffen der Auslöseentscheidung geeignet ist und Bereitstellen eines Testergebnisses, das der Untermenge zugeordnet ist;
Wiederholen der Schritte des Bildens einer Untermenge und des Ermittelns, ob die Untermenge zum Treffen der Auslöseentscheidung geeignet ist, bis ein Endkriterium erfüllt ist; und
Bereitstellen einer geeigneten Untermenge (107), die gemäß dem Endkriterium zum Treffen der Auslöseentscheidung geeignet ist.

2. Verfahren gemäß Anspruch 1, mit einem Schritt des Bereitstellens einer Dimension der geeigneten Untermenge (107).

3. Verfahren gemäß einem der vorangegangenen Ansprüche, bei dem die Untermenge gemäß der Bestimmungsvorschrift gebildet wird, indem aus der vorangegangenen Untermenge ein Merkmal entfernt wird, wenn das der vorangegangenen Untermenge zugeordnete Testergebnis (112) anzeigt, dass die vorangegangene Untermenge zum Treffen der Auslöseentscheidung geeignet ist.

4. Verfahren gemäß einem der vorangegangenen Ansprüche, bei dem die Untermenge gemäß der Bestimmungsvorschrift gebildet wird, indem der vorangegangenen Untermenge ein entferntes Merkmal wieder zugefügt und stattdessen ein anderes Merkmal entfernt wird, wenn das der vorangegangenen Untermenge zugeordnete Testergebnis (112) anzeigt, dass die vorangegangene Untermenge nicht zum Treffen der Auslöseentscheidung geeignet ist.

5. Verfahren gemäß Anspruch 4, bei dem es sich bei dem anderen Merkmal um ein Merkmal handelt, das in vorangegangenen Schritten noch nicht entnommen und wieder zugefügt wurde.

6. Verfahren gemäß einem der vorangegangenen Ansprüche, bei dem das Endkriterium erfüllt ist, wenn das der vorangegangenen Untermenge zugeordnete Testergebnis (106) anzeigt, dass die vorangegangene Untermenge nicht zum Treffen der Auslöseentscheidung geeignet ist und sich gemäß der Bestimmungsvorschrift keine weitere Untermenge bilden lässt und wobei die geeignete Untermenge (107) die zuletzt gebildete vorangegangene Untermenge ist, die gemäß dem Testergebnis zum Treffen der Auslöseentscheidung geeignet ist.

7. Verfahren gemäß einem der Ansprüche 1 oder 2, bei dem die Untermenge gemäß der Bestimmungsvorschrift gebildet wird, indem der vorangegangenen Untermenge ein weiteres Merkmal aus der Menge von Merkmalen zugefügt wird, wenn das der vorangegangenen Untermenge zugeordnete Testergebnis (112) anzeigt, dass die vorangegangene Untermenge nicht zum Treffen der Auslöseentscheidung geeignet ist.

8. Verfahren gemäß Anspruch 7, bei dem das Endkriterium erfüllt ist, wenn das der Untermenge zugeordnete Testergebnis anzeigt, dass die Untermenge zum Treffen der Auslöseentscheidung geeignet ist.

9. Verfahren gemäß einem der vorangegangenen Ansprüche, bei dem zum Bestimmen der Untermenge eine statistische Analyse durchgeführt wird.

10. Verfahren gemäß einem der vorangegangenen Ansprüche, mit einem Schritt des Aufteilens der Merkmale der geeigneten Untermenge (107) in Blöcke (108) gemäß einer ersten Aufteilungsvorschrift und gemäß mindestens einer weiteren Aufteilungsvorschrift und einem Schritt des Prüfens, ob die gemäß der ersten Aufteilungsvorschrift und die gemäß der mindestens einen weiteren Aufteilungsvorschrift aufgeteilten Merkmale jeweils zum Treffen der Auslöseentscheidung geeignet sind und des Bereitstellens eines ersten und mindestens eines weiteren Prüfergebnisses (114).

11. Verfahren gemäß Anspruch 10, bei dem die Blöcke (108) jeweils zwei oder drei Merkmale der geeigneten Untergruppe (107) aufweisen.

12. Verfahren gemäß einem der Ansprüche 10 oder 11, mit einem Schritt des Vergleichens des ersten und des mindestens einen weiteren Prüfungsergebnisses (114) mit dem Testergebnis (112) der geeigneten Untermenge (107) und einem Schritt des Bereitstellens einer Vergleichsinformation, die anzeigt ob das erste Prüfergebnisse oder das mindestens eine weitere Prüfergebnis eine geringere Abweichung von dem Testergebnis der geeigneten Untermenge aufweist.

13. Verfahren zur Ermittlung einer Positionierung von Sensoren in einem Fahrzeug, das die folgenden Schritte umfasst:
Empfangen einer Menge von Merkmalen (562), die zum Treffen einer Auslöseentscheidung eines Insassenschutzmittels des Fahrzeugs geeignet sein können, über eine Schnittstelle, wobei die Merkmale jeweils Sensoren (550) zugeordnet werden können, die an unterschiedlichen Positionen im Fahrzeug angeordnet sind;
Ermitteln einer geeigneten Untermenge (572) aus der Menge von Merkmalen, wobei die in der geeigneten Untermenge enthaltenen Merkmale zum Treffen der Auslöseentscheidung geeignet sind; und
Auswerten der geeigneten Untermenge, um Positionen derjenigen Sensoren zu ermitteln, deren Merkmale zum Treffen der Auslöseentscheidung geeignet sind.

14. Verfahren gemäß Anspruch 13, bei dem die geeignete Untermenge (572) gemäß einem Verfahren gemäß einem der Ansprüche 1 bis 12 ermittelt wird.

15. Steuergerät um alle Schritte eines Verfahrens gemäß einem der Ansprüche 1 bis 14 durchzuführen.

16. Computerprogrammprodukt mit Programmcode, der auf einem maschinenlesbaren Träger gespeichert ist, zur Durchführung des Verfahrens nach einem der Ansprüche 1 bis 14, wenn das Programm auf einem Steuergerät ausgeführt wird.

## Claims

1. Method for determining features for making a decision to trigger a vehicle occupant protection means of a vehicle, which method comprises the following steps:
receiving a set of features (106) which may be suitable for making the decision to trigger, via an interface;
forming a subset from the set of features according to a determination rule which is dependent on a test result (112), wherein the test result is assigned to a preceding subset which has been formed in a preceding step;
determining whether the subset is suitable for making the decision to trigger, and making available a test result which is assigned to the subset; and
repeating the steps of forming a subset and of determining whether the subset is suitable for making the decision to trigger, until a final criterion is met; and
making available a suitable subset (107) which is suitable, according to the final criterion, for making the decision to trigger.

2. Method according to Claim 1, having a step of making available a dimension of the suitable subset (107).

3. Method according to one of the preceding claims, in which the subset is formed according to the determination rule in that a feature is removed from the preceding subset if the test result (112) which is assigned to the preceding subset indicates that the preceding subset is suitable for making the decision to trigger.

4. Method according to one of the preceding claims, in which the subset is formed according to the determination rule in that a feature which has been removed is added to the preceding subset again and instead another feature is removed if the test result (112) which is assigned to the preceding subset indicates that the preceding subset is not suitable for making the decision to trigger.

5. Method according to Claim 4, in which the other feature is a feature which has not yet been removed and added again in preceding steps.

6. Method according to one of the preceding claims, in which the final criterion is met if the test result (112) which is assigned to the preceding subset indicates that the preceding subset is not suitable for making the decision to trigger and no further subset can be formed according to the determination rule, and wherein the suitable subset (107) is the last-formed, preceding subset which is suitable, according to the test result, for making the decision to trigger.

7. Method according to either of Claims 1 and 2, in which the subset is formed according to the determination rule in that a further feature from the set of features is added to the preceding subset if the test result (112) which is assigned to the preceding subset indicates that the preceding subset is not suitable for making the decision to trigger.

8. Method according to Claim 7, in which the final criterion is met if the test result which is assigned to the subset indicates that the subset is suitable for making the decision to trigger.

9. Method according to one of the preceding claims, in which in order to determine the subset, a statistical analysis is carried out.

10. Method according to one of the preceding claims, having a step of dividing the features of the suitable subset (107) into blocks (108) according to a first apportioning rule and according to at least one further apportioning rule and a step of checking whether the features apportioned according to the first apportioning rule and the features apportioned according to the at least one further apportioning rule are each suitable for making the decision to trigger, and making available a first and at least one further test result (114).

11. Method according to Claims 10, in which the blocks (108) each have two or three features of the suitable subset (107).

12. Method according to either of Claims 10 and 11, having a step of comparing the first and the at least one further test result (114) with the test result (112) of the suitable subset (107), and a step of making available a comparison information item which indicates whether the first test result or the at least one further test result has a smaller deviation from the test result of the suitable subset.

13. Method for determining positioning of sensors in a vehicle which comprises the following steps:
receiving a set of features (562) which may be suitable for making a decision to trigger a vehicle occupant protection means of the vehicle, via an interface, wherein the features can each be assigned to sensors (550) which are arranged at different positions in the vehicle;
determining a suitable subset (572) from the set of features, wherein the features contained in the suitable subset are suitable for making the decision to trigger; and
evaluating the suitable subset in order to determine positions of those sensors whose features are suitable for making the decision to trigger.

14. Method according to Claim 13, in which the suitable subset (572) is determined according to a method according to one of Claims 1 to 12.

15. Control device for carrying out all the steps of a method according to one of Claims 1 to 14.

16. Computer program product having program code which is stored on a machine-readable carrier, for carrying out the method according to one of Claims 1 to 14 when the program is run on a control device.

## Revendications

1. Procédé de détermination de caractéristiques en vue de prendre une décision de déclenchement d'un moyen de protection des passagers d'un véhicule, lequel comprend les étapes suivantes :
Réception par le biais d'une interface d'un ensemble de caractéristiques (106) qui peuvent être appropriées pour prendre la décision de déclenchement ;
Formation d'un sous-ensemble à partir de l'ensemble de caractéristiques conformément à une prescription de détermination dépendante du résultat d'un test (112), le résultat du test étant associé à un sous-ensemble précédent qui a été formé dans une étape précédente ;
Détermination si le sous-ensemble est approprié pour prendre la décision de déclenchement et mise à disposition d'un résultat de test qui est associé au sous-ensemble ;
Répétition de l'étape de formation d'un sous-ensemble et de détermination si le sous-ensemble est approprié pour prendre la décision de déclenchement jusqu'à ce qu'un critère de fin soit satisfait ; et
Mise à disposition d'un sous-ensemble approprié (107) qui, selon le critère de fin, est approprié pour prendre la décision de déclenchement.

2. Procédé selon la revendication 1, comprenant une étape de mise à disposition d'une dimension du sous-ensemble approprié (107).

3. Procédé selon l'une des revendications précédentes, selon lequel le sous-ensemble est formé conformément à la prescription de détermination en ce qu'une caractéristique est retirée du sous-ensemble précédent lorsque le résultat de l'essai (112) associé au sous-ensemble précédent indique que le sous-ensemble précédent est approprié pour prendre la décision de déclenchement.

4. Procédé selon l'une des revendications précédentes, selon lequel le sous-ensemble est formé conformément à la prescription de détermination en ce qu'une caractéristique retirée est de nouveau rajoutée au sous-ensemble précédent et, au lieu de cela, une autre caractéristique est retirée lorsque le résultat de l'essai (112) associé au sous-ensemble précédent indique que le sous-ensemble précédent n'est pas approprié pour prendre la décision de déclenchement.

5. Procédé selon la revendication 4, selon lequel l'autre caractéristique est une caractéristique qui n'avait pas encore été retirée dans des étapes précédentes et de nouveau rajoutée.

6. Procédé selon l'une des revendications précédentes, selon lequel le critère de fin est satisfait lorsque le résultat de l'essai (112) associé au sous-ensemble précédent indique que le sous-ensemble précédent n'est pas approprié pour prendre la décision de déclenchement et aucun nouveau sous-ensemble ne peut être formé conformément à la prescription de détermination et selon lequel le sous-ensemble approprié (107) est le dernier sous-ensemble précédent formé qui, conformément au résultat de l'essai, est approprié pour prendre la décision de déclenchement.

7. Procédé selon l'une des revendications 1 ou 2, selon lequel le sous-ensemble est formé conformément à la prescription de détermination en ce qu'une caractéristique supplémentaire issue de l'ensemble de caractéristiques est ajoutée au sous-ensemble précédent lorsque le résultat de l'essai (112) associé au sous-ensemble précédent indique que le sous-ensemble précédent n'est pas approprié pour prendre la décision de déclenchement.

8. Procédé selon la revendication 7, selon lequel le critère de fin est satisfait lorsque le résultat de l'essai associé au sous-ensemble indique que le sous-ensemble est approprié pour prendre la décision de déclenchement.

9. Procédé selon l'une des revendications précédentes, selon lequel une analyse statistique est effectuée pour déterminer le sous-ensemble.

10. Procédé selon l'une des revendications précédentes, comprenant une étape de partage des caractéristiques du sous-ensemble approprié (107) en blocs (108) conformément à une première prescription de partage et conformément à au moins une autre prescription de partage et une étape de contrôle si les caractéristiques partagées conformément à la première prescription de partage et conformément à l'au moins une autre prescription de partage sont respectivement appropriées pour prendre la décision de déclenchement et de mise à disposition d'un premier et d'au moins un autre résultat de contrôle (114).

11. Procédé selon la revendication 10, selon lequel les blocs (108) présentent respectivement deux ou trois caractéristiques du sous-ensemble approprié (107).

12. Procédé selon l'une des revendications 10 ou 11, comprenant une étape de comparaison du premier et de l'au moins un autre résultat de contrôle (114) avec le résultat du test (112) du sous-ensemble approprié (107) et une étape de mise à disposition d'une information de comparaison qui indique si le premier résultat de contrôle ou l'au moins un autre résultat de contrôle présente un léger écart par rapport au résultat du test du sous-ensemble approprié.

13. Procédé pour déterminer un positionnement de capteurs dans un véhicule, lequel comprend les étapes suivantes :
Réception, par le biais d'une interface, d'un ensemble de caractéristiques (562) qui sont appropriées pour prendre une décision de déclenchement d'un moyen de protection des passagers du véhicule, les caractéristiques pouvant respectivement être associées à des capteurs (550) qui sont disposés en différentes positions dans le véhicule ;
Détermination d'un sous-ensemble approprié (572) à partir de l'ensemble de caractéristiques, les caractéristiques contenues dans le sous-ensemble approprié étant appropriées pour prendre la décision de déclenchement ; et
Interprétation du sous-ensemble approprié afin de déterminer les positions des capteurs dont les caractéristiques sont appropriées pour prendre la décision de déclenchement.

14. Procédé selon la revendication 13, selon lequel le sous-ensemble approprié (572) est déterminé conformément à un procédé selon l'une des revendications 1 à 12.

15. Contrôleur pour exécuter toutes les étapes d'un procédé selon l'une des revendications 1 à 14.

16. Produit de programme informatique comprenant un code de programme qui est enregistré sur un support lisible par machine pour mettre en oeuvre le procédé selon l'une des revendications 1 à 14 lorsque le programme est exécuté sur un contrôleur.
